# EUROPEAN PATENT APPLICATION

(11) **EP 4 722 018 A1**
(43) Date of publication of application: **08.04.2026**
(21) Application number: 24815033.6
(22) Date of filing: 23.04.2024
(51) Int. Cl.: B60L 15/20

(54) **VEHICLE CONTROL METHOD**

(30) Priority: 31.05.2023 JP 2023090033
(71) Applicant: THK CO., LTD., Minato-ku Tokyo 108-8506 (JP)
(72) Inventor: NISHIDE Tetsuhiro, Tokyo 108-8506 (JP); WATANABE Yoshihito, Tokyo 108-8506 (JP); MINAMI Toshiro, Tokyo 108-8506 (JP); KAMADA Shinobu, Tokyo 108-8506 (JP)
(74) Representative: Prinz & Partner mbB
(86) International application number: PCT/JP2024/015826
(87) International publication number: WO 2024/247547

(57) **Abstract**

Provided is a control method for a vehicle capable of suppressing reversing moment around a kingpin in a non-ground contact state of a tire and reducing vehicle vibration in a vehicle of an in-wheel motor type. The control method for a vehicle including an in-wheel motor in a wheel includes: a ground contact state-determining step of determining whether or not the wheel is in a non-ground contact state; and a torque controlling step of performing torque control on the in-wheel motor when it is determined in the ground contact state-determining step that the wheel is not in contact with the ground.

## Description

### TECHNICAL FIELD

The present invention relates to a control method for a vehicle, and in particular, to a control method for an in-wheel motor.

### BACKGROUND ART

It has been common practice to perform vehicle motion control for the purpose of improving handling stability and ride comfort, which are affected by various external forces and the like generated while the vehicle is travelling. Various control methods have been known for such vehicle motion control depending on causes of applied external forces.

For example, for the purpose of suppressing yaw moment generated on a vehicle and improving handling stability of a vehicle, a motion control apparatus for a vehicle described in Patent Literature 1 includes: an acquisition device of acquiring a kingpin axis moment, which is a moment generated around a kingpin axis of a front wheel of a vehicle that includes right and left front and rear wheels; a calculation device of calculating an amount of ground contact load of the front wheel for generating a counter-moment around the kingpin axis to cancel out the kingpin axis moment; and a control device of controlling ground contact load of the front wheel based on the amount of ground contact load.

### Citation List

### Patent Literature

Patent Literature 1: Japanese Patent Laid-Open No. 2009-132183

### DISCLOSURE OF THE INVENTION

### PROBLEMS TO BE SOLVED BY THE INVENTION

Here, as an electric vehicle (EV) that relies on an electric motor or a motor to drive the vehicle, in addition to what is called an "on-board motor type" that includes a motor mounted in a vehicle body in a similar way as to a conventional vehicle including an internal combustion engine mounted therein and obtains a driving force by transmitting a rotational force of the electric motor to each wheel, what is called an "in-wheel motor type" that includes a motor housed in a wheel disc of a wheel assembly to drive the wheel has been known.

Since a large part of the driving force of the electric motor is transmitted directly to wheels, an electric vehicle of such an in-wheel motor type has various advantages in that energy losses due to conventional gears, a driving shaft, or the like are reduced, and moreover, it is easy to reduce a vehicle-body weight and secure a cabin volume because it is not necessary to arrange these gears, a driving shaft, or the like in the vehicle body.

However, it has been known that the electric vehicle of an in-wheel motor type suffers from an increase in the weight of a wheel because a motor is housed in the wheel, which leads to degradation of ride comfort and maneuverability due to an increase in what is called an unsprung weight. In particular, earnest studies by the inventors have revealed that the electric vehicle of an in-wheel motor type suffers from degraded vehicle vibration when a tire is in a non-ground contact state, for example, during travel on a highly uneven road surface because toe-in or toe-out moment is generated around a kingpin, so that the wheel vibrates around the kingpin and the vibration is transmitted to the vehicle.

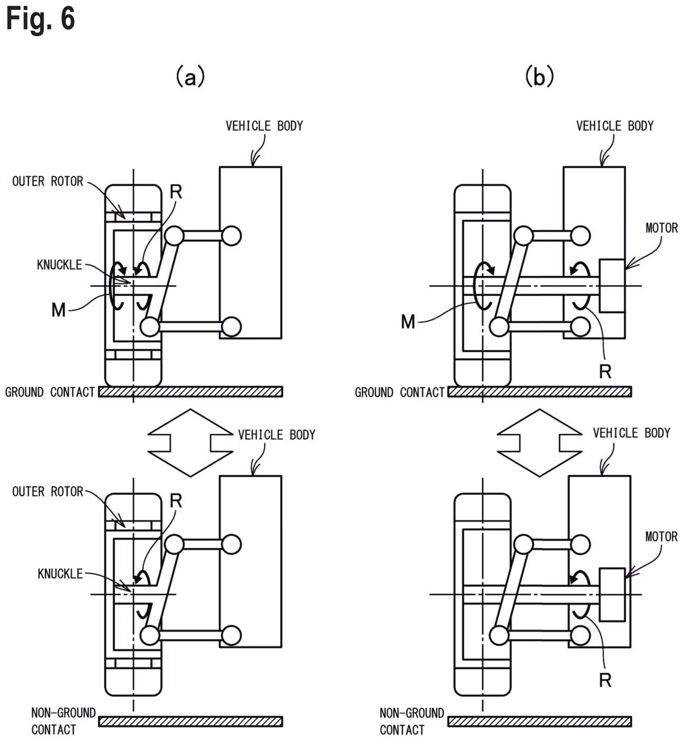

To detail the mechanism of the vehicle vibration, in the case of a vehicle that includes an internal combustion engine mounted therein or a vehicle of an on-board motor type, as illustrated in the view (b) of FIG. 6, a torque R due to a motor reaction force is received by the vehicle body, and therefore, even when a torque M due to a driving force is lost by being placed into a non-ground contact state, vibration caused by the torque R due to the motor reaction force does not occur, whereas in the case of an in-wheel motor type, as illustrated in the view (a) of FIG. 6, a torque R due to a motor reaction force occurs around a knuckle, so that although a torque M due to a driving force and the torque R due to the motor reaction force have been in equilibrium in a ground contact state, excitation occurs in a non-ground contact state due to the motor reaction force when the tire rotation is accelerated because the torque M due to the driving force is lost.

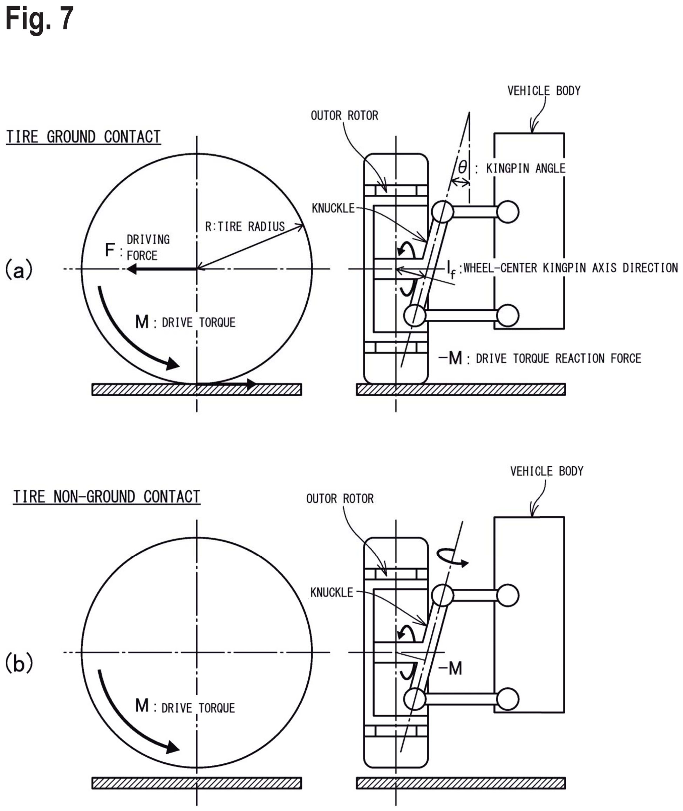

Specifically, as illustrated in the view (a) of FIG. 7, in the case of a vehicle of an in-wheel motor type and in a ground contact state of a tire, when a kingpin angle is defined as θ, a wheel-center kingpin axis direction as l_{f}, and a tire radius as r for the moment around a knuckle kingpin, (1) a toe-in moment due to a driving force F: F•l_{f}cosθ and (2) a toe-out moment due to a drive torque reaction force M: -Msinθ are generated. When these moments are added together, F•l_{f}cosθ - Msinθ = F•rtanθ•cosθ - F•rsinθ = 0 is established, and therefore, no moment around a kingpin is generated.

In contrast, as illustrated in the view (b) of FIG. 7, in a non-ground contact state of a tire, since (1) the toe-in moment due to the driving force F is 0, the moment around a kingpin is constituted only of (2) the toe-out moment due to the drive torque reaction force: -M•sinθ, so that the toe-out moment due to the drive torque reaction force is generated around the kingpin. The toe-out moment around a kingpin thus generated causes the excitation of the kingpin. Then, the problem is that although dependent on sprung mass, unsprung mass, and stiffness of suspension components or the like, for example, resonance occurs due to the resonant frequency of approximately 3.2 Hz and the resonance leads to degradation of vehicle vibration.

An object of the present invention, which has been made to solve the above-described problem, is to provide a control method for a vehicle capable of suppressing reversing moment around a kingpin in a non-ground contact state of a tire and reducing vehicle vibration in a vehicle of an in-wheel motor type.

### MEANS FOR SOLVING THE PROBLEMS

A control method for a vehicle according to the present invention to solve the above-described problem is a control method for a vehicle including an in-wheel motor in a wheel, including: a ground contact state-determining step of determining whether or not the wheel is in a non-ground contact state; and a torque controlling step of performing torque control on the in-wheel motor when it is determined in the ground contact state-determining step that the wheel is not in contact with the ground.

### EFFECTS OF THE INVENTION

According to the control method for a vehicle according to the present invention, when it is determined that an in-wheel motor is in a non-ground contact state, torque control is performed on the in-wheel motor to suppress toe-out moment of the in-wheel motor, so that it is possible to suppress resonance around a kingpin and reduce vehicle vibration.

### BRIEF DESCRIPTION OF THE DRAWINGS

[FIG. 1] FIG. 1 is a schematic diagram of a vehicle to which a control method for a vehicle according to an embodiment of the present invention is applied.
[FIG. 2] FIG. 2 is a diagram illustrating a suspension apparatus of the vehicle to which the control method for a vehicle according to the embodiment of the present invention is applied.
[FIG. 3] FIG. 3 is an explanatory diagram of a control method for a vehicle according to a first embodiment of the present invention.
[FIG. 4] FIG. 4 is a diagram illustrating a relationship between time and a moment around a kingpin and a motor torque in the control method for a vehicle according to the first embodiment of the present invention.
[FIG. 5] FIG. 5 is an explanatory diagram of a control method for a vehicle according to a second embodiment of the present invention.
[FIG. 6] FIG. 6 shows diagrams for describing a driving force and a motor reaction force in an in-wheel motor type and in an on-board motor type.
[FIG. 7] FIG. 7 shows diagrams for describing moments around a kingpin when a tire is in or not in contact with the ground in an in-wheel motor type.

### MODE FOR CARRYING OUT THE INVENTION

Embodiments of a control method for a vehicle according to the present invention will now be described with reference to drawings. The embodiments described below are not intended to limit the invention according to claims, and all combinations of features described in the embodiments are not necessarily essential for solution of the present invention.

### [First Embodiment]

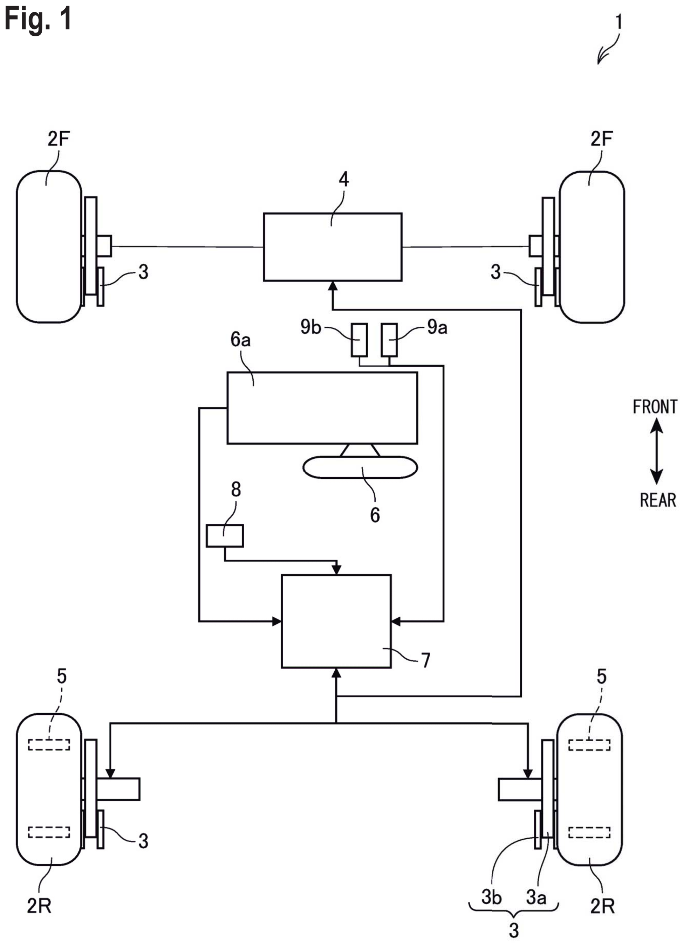

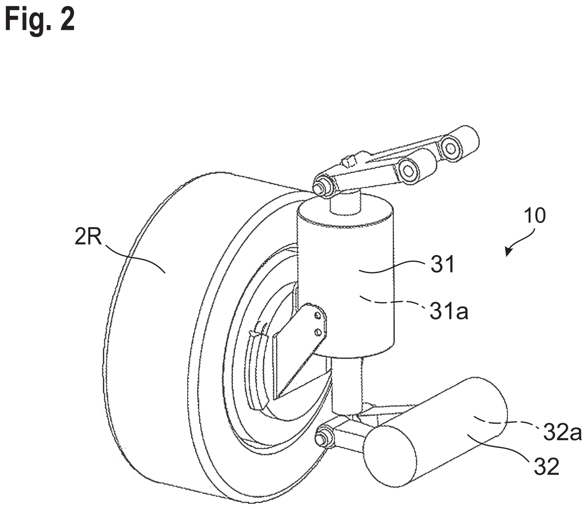

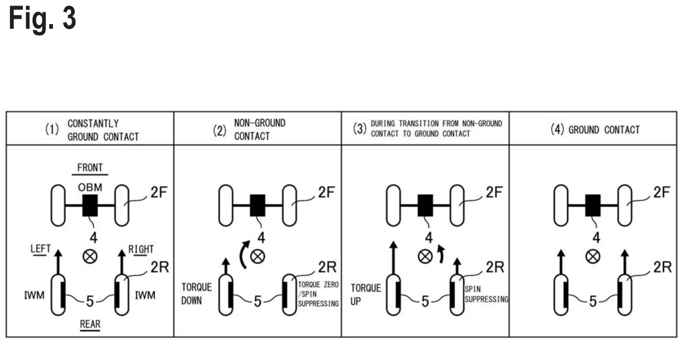

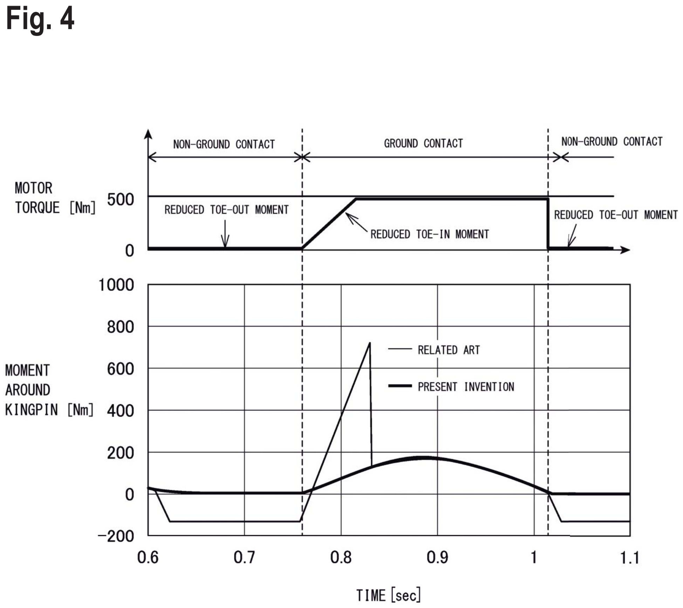

FIG. 1 is a schematic diagram of a vehicle to which a control method for a vehicle according to an embodiment of the present invention is applied, FIG. 2 is a diagram illustrating a suspension apparatus of the vehicle to which the control method for a vehicle according to the embodiment of the present invention is applied, FIG. 3 is an explanatory diagram of a control method for a vehicle according to a first embodiment of the present invention, and FIG. 4 is a diagram illustrating a relationship between time and a moment around a kingpin and motor torque in the control method for a vehicle according to the first embodiment of the present invention.

As illustrated in FIG. 1, the control method for a vehicle according to the embodiment is executed by an electronic control unit 7 mounted in a vehicle 1. The vehicle 1 includes front wheels 2F located at the front left and right sides of the vehicle 1 and rear wheels 2R located at the rear left and right sides thereof. The front wheels 2F and the rear wheels 2R each include a friction brake apparatus 3 that brakes the rotation of the wheel by a frictional force.

The front wheel 2F is driven by an on-board motor 4 mounted in the vehicle body, and the rear wheel 2R is driven by an in-wheel motor 5 housed in the rear wheel 2R. Furthermore, the front wheel 2F is provided with a steering mechanism (not illustrated) that causes the front wheel 2F to tilt toward a steering direction in response to operation of a steering wheel 6 located at the driver's seat and functions as a steerable wheel. Various configurations known in the art can be adopted to the steering mechanism, and for example, a by-wire system that includes a steer actuator can be used.

The steer actuator is wired such that it can receive a signal from the electronic control unit 7 that receives a signal from an operating unit 6a, which includes the steering wheel 6 operated by a driver, to perform predetermined processing, and controls the front wheels to achieve a steering angle corresponding to the steering wheel 6 operated by the driver.

Furthermore, the electronic control unit 7 is connected to each of the on-board motor 4 and the in-wheel motor 5 and, when an accelerator pedal 9a is operated by the driver, controls the on-board motor 4 and the in-wheel motor 5 to provide a driving force in response to the amount of operation of the accelerator pedal 9a. Furthermore, when a brake pedal 9b is operated by the driver, the electronic control unit 7 controls the friction brake apparatus 3 as well as the on-board motor 4 and the in-wheel motor 5 to operate as regenerative braking devices in response to the brake operation.

The friction brake apparatus 3 includes a brake disc 3a that has a disc shape and is attached so as to be coaxial with each axle of the front wheels 2F and the rear wheels 2R, and a caliper 3b equipped with brake pads for gripping the brake disc 3a in an axial direction. The caliper 3b is connected to a master cylinder (not illustrated) that is actuated by the brake operation when the driver operates the brake pedal 9b, and generates a frictional force by being pressed against the brake disc 3a due to an amplification effect of oil or air pressure caused by the master cylinder. Note that the friction brake apparatus 3 can receive a signal from the electronic control unit 7 to adjust the degree of pressing of the caliper 3b such that the frictional force between the brake pad and the brake disc 3a is adjusted as necessary regardless of the pedal force applied by the driver to the brake pedal 9b.

The on-board motor 4 and the in-wheel motor 5 receive a signal from the electronic control unit 7 depending on the opening degree of the accelerator pedal 9a operated by the driver and rotate such that the vehicle 1 moves forward in the direction of travel or moves backward against the direction of travel. Furthermore, during braking while the brake pedal 9b is operated, the on-board motor 4 and the in-wheel motor 5 are operated as an electric generator in reverse by inputting shaft rotation for use as a regenerative braking apparatus that converts kinetic energy into electrical energy, which is retrieved and consumed for braking.

The electronic control unit 7 includes a microprocessor, which is a control device, and is operated by electricity supplied from a battery, which is not illustrated. The electronic control unit 7 receives signals from the operating unit 6a, the brake pedal 9b, the accelerator pedal 9a, and the like, processes various signals, and transmits signals for driving the on-board motor 4 and the in-wheel motor 5 at a predetermined rotational speed.

The front wheels 2F and the rear wheels 2R are each attached to an active suspension apparatus 10. As illustrated in FIG. 2, the active suspension apparatus 10 is attached between each wheel (for example, a rear wheel 2R) and the vehicle body and dampens vibration or impact input from a road surface, keeps the attitude of the vehicle body, and ensures driving stability. The active suspension apparatus 10 includes an active suspension 31 and a variable damper 32.

The active suspension 31 includes a spring, which is a helical compression spring, and a ride height actuator 31a that suppresses movement of the vibrating spring and can adjust the height of the vehicle body from the ground.

The ride height actuator 31a includes, for example, a ball screw mechanism including a ball screw and a ball screw nut threaded together and generates a damping force from a resistive force of a motor that generates electricity through an up-and-down expanding-and-retracting motion of the ball screw mechanism. Furthermore, the damping force can be adjusted by a propulsive force of the ball screw mechanism that expands and retracts up and down through energization of the motor. In addition, driving the motor in this way to cause the ball screw mechanism to expand and retract up and down causes the entire length of the active suspension 31 to expand and retract, changing the spacing between the wheel and the vehicle body, so that the height of the vehicle body from the ground can be adjusted.

The variable damper 32 is a rotary damper relying on a damping force generated due to magnetorheological resistance. The variable damper 32 includes a variable damper actuator 32a that is connected to the electronic control unit 7 and capable of adjusting the damping force through current control.

The variable damper actuator 32a is held by a bearing and the like, for example, such that a rotating shaft is rotatable relative to a body case. A coil and a rotor are incorporated in the body case and the rotating shaft is attached to the rotor. There is a clearance around the rotor and the clearance is filled with magnetic fluid. When current is caused to flow through the coil in the variable damper actuator 32a thus constructed, viscosity resistance of the filled magnetic fluid increases, so that a force that impedes rotation of the rotor is generated. Controlling the current input to the coil in this way enables the variable damper actuator 32a to adjust the damping force of the variable damper 32.

The variable damper 32 as described above provides excellent responsiveness because a damping force can be electrically induced, and it is possible to suppress vibration of the vehicle body even when the road surface during travel has high-frequency steps. Furthermore, the ability to steplessly adjust the viscosity resistance of the magnetic fluid makes it possible to perform control to minimize the current to generate a required torque, and therefore possible to reduce power consumption.

The active suspension apparatus 10 is connected to the electronic control unit 7 and is configured to be able to transmit an expansion/retraction amount of the active suspension 31 and the damping force of the variable damper 32 to the electronic control unit 7. Furthermore, the vehicle 1 includes a vehicle-height sensor 8 attached thereto. The vehicle-height sensor 8 is a sensor capable of measuring the distance from a lower surface of the vehicle 1 to a road surface, and preferably, for example, an optical sensor, an ultrasonic distance sensor, and the like are used. Vehicle-height data measured by the vehicle-height sensor 8 is transmitted to and processed by the electronic control unit 7.

A control method of a control method for a vehicle according to the embodiment will now be described. The control method for a vehicle according to the embodiment performs torque control of the in-wheel motor 5 attached to the rear wheel 2R of the vehicle 1 as described above.

In the control method for a vehicle according to the embodiment, in the electronic control unit 7, a ground contact state-determining step of determining whether the rear wheel 2R is in a ground contact state or in a non-ground contact state from the vehicle-height sensor 8 or an expansion/retraction amount of the active suspension 31 is executed. In the ground contact state-determining step, the vehicle-height data obtained from the vehicle-height sensor 8 and the expansion/retraction amount of the active suspension 31 are compared. At this time, when the vehicle-height data is larger than a predefined expansion/retraction amount in a ground contact state of the active suspension 31, it is possible to determine that the rear wheel 2R is not in contact with the ground.

Even a vehicle that is not equipped with the vehicle-height sensor 8 or the active suspension 31 may be configured to determine that the rear wheel 2R is in a non-ground contact state, for example, when the rotational speed of the in-wheel motor 5 is larger than the speed of the vehicle as a result of comparison between the speed of the vehicle and the rotational speed of the in-wheel motor 5 or when angular acceleration of the in-wheel motor 5 exceeds a predetermined threshold.

When it is determined in the ground contact state-determining step that the rear wheel 2R is in a ground contact state, as illustrated in FIG. 3 (1), the on-board motor 4 of the front wheels 2F and the in-wheel motor 5 of the rear wheels 2R are controlled considering a normal driving state. Specifically, torque control is performed such that right and left rear wheels 2R both exhibit the same torque.

Next, when it is determined in the ground contact state-determining step that a rear wheel 2R is not in contact with the ground, the electronic control unit 7 executes a torque controlling step of the in-wheel motor 5. The description below will be made as to when it is determined that the right rear wheel is not in contact with the ground. As illustrated in the column (2) of FIG. 3, in the torque controlling step, control is performed such that the torque of the in-wheel motor of the right rear wheel determined to be in a non-ground contact state is caused to be zero. At this time, the torque of the in-wheel motor of the left rear wheel that is in a ground contact state is reduced. Causing the torque of the wheel in a non-ground contact state to be zero in this way ensures that no drive torque reaction force is generated in the right rear wheel, and therefore, it is possible to suppress toe-out moment due to the drive torque reaction force. Furthermore, reducing the torque of the left rear wheel in a ground contact state makes it possible to reduce negative yaw moment.

Next, when the right rear wheel 2R in a non-ground contact state makes a transition to a ground contact state, as illustrated in the column (3) of FIG. 3, control is performed to gradually increase the torque of the right rear wheel 2R from zero. The transition from a non-ground contact state to a ground contact state may be determined based on changes in the vehicle-height sensor 8 and the expansion/retraction amount of the active suspension 31 as described above or may be determined based on motor angular velocity of the in-wheel motor 5 of the right rear wheel 2R. At this time, it is preferable to gradually increase the torque of the left rear wheel 2R.

Thereafter, when the right rear wheel 2R has completed a transition to a ground contact state, the torques of the right and left rear wheels 2R are made equal into a normal driving state.

Next, with reference to FIG. 4, comparison between the control method for a vehicle according to the embodiment and when no torque control is performed even when the wheel is in a non-ground contact state as known in the art will be described.

With respect to the moment around a kingpin of a vehicle to which the control method for a vehicle according to the embodiment is applied, since the motor torque of a wheel that is not in contact with the ground in a non-ground contact state is caused to be zero, it can be seen that the toe-out moment specific to the in-wheel motor is successfully suppressed and the toe-in moment due to sudden contact with the ground is suppressed even when making a transition to a ground contact state. Since the toe-out moment and the toe-in moment are suppressed, it is possible to reduce vehicle vibration due to the moments.

In contrast, when no torque control is performed even in a non-ground contact state as known in the art, it can be seen that the toe-out moment specific to the in-wheel motor is generated in a non-ground contact state and the toe-in moment due to sudden contact with the ground is generated when making a transition to a ground contact state. The occurrence of the toe-out moment or the toe-in moment leads to degradation of vehicle vibration.

In the control method for a vehicle according to the first embodiment described above, description has been made to a control method of causing the torque of the rear wheel 2R on the right side, which is determined to be in a non-ground contact state, to be zero, and reducing the torque of the rear wheel 2R on the left side. In a control method for a vehicle according to a second embodiment described next, a torque control method different from that of the above-described first embodiment will be described. Members that are the same as or similar to those of the first embodiment described above are given the same reference signs, and the description will not be repeated.

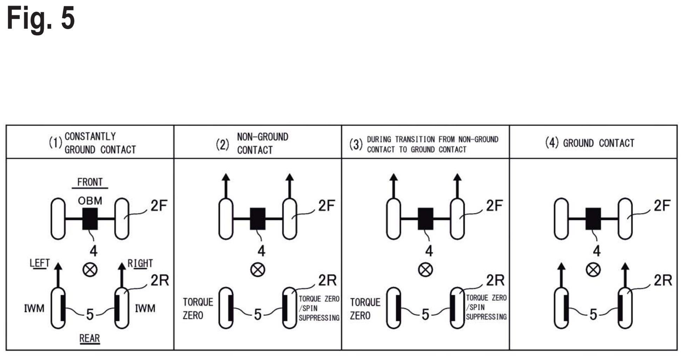

FIG. 5 is an explanatory diagram of a control method for a vehicle according to the second embodiment of the present invention.

As illustrated in FIG. 5, in the control method for a vehicle according to the embodiment, when it is determined in the ground contact state-determining step that any of the rear wheels 2R is in a non-ground contact state, control is performed to cause the torque to be zero for both left and right rear wheels 2R, and at the same time, increase the torque of the on-board motor 4 that drives the front wheels 2F.

In this way, when the rear wheel 2R is in a non-ground contact state, causing the torque of the in-wheel motor to be zero for both left and right rear wheels 2R makes it possible to bring the yaw moment in the negative direction to zero when the in-wheel motor 5 is in a non-ground contact state, and the yaw moment in the positive direction due to sudden contact with the ground will not be generated either even when making a transition to a ground contact state, so that it is possible to suppress yaw moment applied to the vehicle. Note that when both the right and left rear wheels 2R are placed into a ground contact state, as illustrated in the column (4) of FIG. 5, the on-board motor 4 and the in-wheel motor 5 are driven with normal torque control.

By controlling in this way, the yaw moment generated on the vehicle can be suppressed without precise control of transition timing from a non-ground contact state to a ground contact state, and therefore, it is possible to suppress vehicle vibration with simpler control. Furthermore, since the torque of the on-board motor 4 of the front wheels 2F is increased, a sense of deceleration felt by the driver when the torque of the rear wheels 2R is caused to be zero can be reduced, and it is possible to improve safety of travelling on a rough road, which is a noticeably uneven road.

In the above-described embodiments, while description has been made as to when the rear wheel on the right side is placed into a non-ground contact state, similar control can be performed when the rear wheel on the left side is placed into a non-ground contact state. Furthermore, in the above-described embodiments, while description has been made as to when the control method for a vehicle according to the embodiment is applied to the vehicle 1 of a type in which the front wheels 2F are driven by the on-board motor 4, it may be applied to a vehicle in which the front wheels 2F are also driven by the in-wheel motors 5. It is obvious from claims that those variations and modifications may be encompassed by the technical scope of the present invention.

### REFERENCE NUMERALS

1: vehicle, 2F: front wheel, 2R: rear wheel, 4: on-board motor, 5: in-wheel motor

## Claims

1. A control method for a vehicle including an in-wheel motor in a wheel, the control method for a vehicle comprising:
a ground contact state-determining step of determining whether or not the wheel is in a non-ground contact state; and
a torque controlling step of performing torque control on the in-wheel motor when it is determined in the ground contact state-determining step that the wheel is not in contact with the ground.

2. The control method for a vehicle according to claim 1, wherein
the torque controlling step causes a torque of the in-wheel motor to be zero.

3. The control method for a vehicle according to claim 2, wherein
the torque controlling step gradually increases the torque of the in-wheel motor when the wheel makes a transition to a ground contact state.

4. The control method for a vehicle according to claim 1, wherein
in the vehicle, front wheels are driven by an on-board motor and rear wheels are each driven by the in-wheel motor.

5. The control method for a vehicle according to claim 4, wherein
the torque controlling step causes a torque of the in-wheel motor to be zero and increases a torque of the on-board motor.

6. The control method for a vehicle according to claim 1, wherein
at least the ground contact state-determining step includes any one of determining a ground contact state of the wheel from a travel speed of the vehicle and a rotational speed of the wheel, determining a ground contact state of the wheel from a distance from the vehicle to a road surface and a stroke length of a suspension from which the wheel is suspended, and determining a ground contact state of the wheel from an angular velocity of the wheel.
